**Europäisches Patentamt**

**European Patent Office**

**Office européen des brevets**

(19)

(11) Veröffentlichungsnummer : **0 549 523 A1**

(12)

# EUROPÄISCHE PATENTANMELDUNG

(21) Anmeldenummer : **92810933.9**

(22) Anmeldetag : **01.12.92**

(51) Int. Cl.⁵ : **C08L 67/06,** // (C08L67/06, 61:20, 23:28)

(30) Priorität : **09.12.91 CH 3610/91**

(43) Veröffentlichungstag der Anmeldung : **30.06.93 Patentblatt 93/26**

(84) Benannte Vertragsstaaten : **AT DE ES FR GB IT SE**

(71) Anmelder : **CIBA-GEIGY AG**
**Klybeckstrasse 141**
**CH-4002 Basel (CH)**

(72) Erfinder : **Günther, Peter, Dr.**
**Bachfeld 12**
**W-6840 Lampertheim 1 (DE)**
Erfinder : **Eberle, Wolfgang**
**Tulpenweg 6**
**W-6140 Bensheim (DE)**

(54) **UP/MF-Formmassen zur Hertellung von Formteilen mit verbesserter Abriebsfestigkeit.**

(57)   Die Erfindung betrifft eine härtbare Formmasse auf Basis ungesättigter Polyesterharze und Melaminformaldehyharze, die zusätzlich ein chloriertes Polyethylen in so grossem Anteil enthält, dass die Abriebsfestigkeit daraus hergestellter gehärteter Massen besser ist, als wenn die Formmasse das chlorierte Polyethylen nicht enthielte. Die erfindungsgemässen Formmassen eignen sich z. B. zur Herstellung von stark abriebsbelasteten Formteilen für elektrische Bauteile.

EP 0 549 523 A1

Die Erfindung betrifft härtbare Formmassen auf Basis ungesättigter Polyesterharze und Melaminformaldehyharze, auch UP/MF-Formmassen genannt, ein Verfahren zur Verbesserung der Abriebsfestigkeit gehärteter Massen auf der genannten Basis, die Verwendung von chloriertem Polyethylen als Zusatz zu härtbaren Formmassen auf Basis ungesättigter Polyesterharze und Melaminformaldehyharze und gehärtete Massen erhältlich aus den beschriebenen Formmassen.

Härtbare Formmassen auf Basis ungesättigter Polyesterharze (auch als UP-Harze bezeichnet) und Melaminformaldehyharze (MF-Harze) und gegebenenfalls weiterer Zusatzstoffe sind bekannt und z. B. in einem Aufsatz von Edmund Heinrich "Rieselfähige Polyesterharz-Formmassen (Teil 2)", PLASTVERARBEITER, 39. Jahrgang 1988/Nr. 3, S. 50 bis 54, näher beschrieben. Sie weisen unter anderem den Vorteil auf, dass sie eine wesentlich geringere Gesamtschwindung und insbesondere auch Nachschwindung zeigen als Formmassen auf Basis eines einzigen der genannten Harztypen. Dies gilt ganz besonders im Vergleich zu reinen Melaminformaldehydformmassen (MF-Formmassen). Die schon erwähnte "Nachschwindung" hat ihre Ursache in einem Weiterlaufen der immer mit einem gewissen Volumenschwund verbundenen Vernetzungsreaktion im bereits gehärteten Formteil und tritt daher naturgemäss besonders an stark temperaturbelasteten Stellen solcher Formteile auf. Bei reinen Melaminformmassen kann die Nachschwindung leicht zur Bildung von Rissen oder -bei ungleicher Temperaturbelastung- sogar zur völligen Deformation und Zerstörung der Formkörper führen. Da Temperaturverhältnisse, wie die genannten, besonders bei elektrischen Geräten häufig auftreten, für deren Herstellung sich aber Bauteile aus MF-Formmassen wegen ihrer guten Isolationseigenschaften besonders gut eignen würden, stellte die Entwicklung der UP/MF-Formmassen, die ähnlich gute elektrische Eigenschaften wie MF-Formmassen zeigen, bereits einen erheblichen Fortschritt gegenüber reinen MF- aber auch reinen UP-Formmassen dar.

Für die Herstellung auch mechanisch stark belasteter, beweglicher Bauteile, z. B. von Schaltbrücken, sind die bekannten UP/MF-Formmassen jedoch noch nicht gut geeignet, da ihre Abriebsfestigkeit wesentlich geringer ist als die der reinen UP-und MF-Formmassen.

Überraschend hat sich nun aber gezeigt, dass sich die Abriebsfestigkeit von UP/MF-Formteilen stark verbessern lässt, wenn den UP/MF-Formmassen, aus denen sie hergestellt werden, genügend chloriertes Polyethylen beigemischt wird. Dies konnte besonders deshalb nicht erwartet werden, weil sich bei Zugabe geringer Mengen von chloriertem Polyethylen zu den UP/MF-Formmassen die Abriebsfestigkeit dieses Materials zunächst verschlechtert. Beispielsweise kann sich die Abriebsfestigkeit bei Zugabe von ca. drei Gewichtsprozent chloriertem Polyethylen zu einer herkömmlichen UP/MF-Formmasse um ca. ein Drittel verschlechtern. Erst ab einer gewissen Zugabemenge tritt der nunmehr gefundene abriebsverbessernde Effekt zu Tage.

Infolge des Anteils an chloriertem Polyethylen steigt zwar auch die Nachschwindung des Materials wieder leicht an; dieser Anstieg gegenüber der Nachschwindung von reinen UP/MF-Formmassen ist aber für die Praxis vernachlässigbar gering. Insbesondere bleibt die Nachschwindung des Materials bei weitem niedriger als die Nachschwindung, die reine MF-Formmassen zeigen, und ist auch niedriger als die reiner UP-Formmassen, die ohnehin schon eine sehr geringe Nachschwindung zeigen.

Gegenstand der vorliegenden Erfindung ist daher eine härtbare Formmasse auf Basis ungesättigter Polyesterharze und Melaminformaldehyharze, die zusätzlich ein chloriertes Polyethylen in so grossem Anteil enthält, dass die Abriebsfestigkeit daraus hergestellter gehärteter Massen besser ist, als wenn die Formmasse das chlorierte Polyethylen nicht enthielte.

Die Erfindung betrifft weiterhin die Verwendung von chloriertem Polyethylen als Zusatz zu härtbaren Formmassen auf Basis ungesättigter Polyesterharze und Melaminformaldehyharze zur Verbesserung der Abriebsfestigkeit daraus hergestellter gehärteter Massen.

Im allgemeinen sind hierzu mehr als etwa 5 Gewichtsprozent chloriertes Polyethylen, bezogen auf die Gesamtmenge von ungesättigtem Polyesterharz und Melaminformaldhydharz erforderlich. Die zweckmässige Obergrenze dürfte generell bei etwa 40 bis 50 Gewichtsprozent an chloriertem Polyethylen liegen. Bei Zusätzen bis zu dieser Höhe ist die Nachschwindung im allgemeinen noch in einem technisch akzeptablen Rahmen. Bevorzugt sind Formmassen, die zu einer Nachschwindung führen, die höchstens 0,1%, besser noch höchstens 0,05% über der liegt, die ein Material aus einer entsprechenden UP/MF-Formmasse ohne den Zusatz an chloriertem Polyethylen zeigt.

Erfindungsgemässe Formmassen können insbesondere 6 bis 35 Gewichtsprozent chloriertes Polyethylen enthalten, bezogen auf die Gesamtmenge von ungesättigtem Polyesterharz und Melaminformaldehydharz. Ganz besonders bevorzugt sind Formmassen, die 10 bis 35, insbesondere 10 bis 20, Gewichtsprozent chloriertes Polyethylen enthalten, ebenfalls bezogen auf die Gesamtmenge von ungesättigtem Polyesterharz und Melaminformaldehydharz, da Formteile aus diesen Massen im allgemeinen die beste Balance zwischen Abriebsfestigkeit und Nachschwindung zeigen.

Gegenstand der Erfindung ist weiterhin ein Verfahren zur Verbesserung der Abriebsfestigkeit gehärteter Massen auf Basis ungesättigter Polyesterharze und Melaminformaldehyharze, bei dem man Formmassen auf Basis beider genannter Harze vor der Härtung 6 bis 35 Gewichtsprozent, bezogen auf die Gesamtmenge von ungesättigtem Polyesterharz und Melaminformaldehydharz, eines chlorierten Polyethylens einverleibt.

Ungesättigte Polyesterharze, die für die erfindungsgemässen Formmassen geeignet sind, sind dem Fachmann geläufig. Dabei handelt es sich um feste Substanzen, die aus einer Mischung von langkettigen ungesättigten Polyestern und ungesättigten Monomeren bestehen. Die langkettigen ungesättigten Polyester werden in üblicher Weise durch Kondensation von Diolen und gesättigten sowie ungesättigten Dicarbonsäuren oder deren Anhydriden erhalten. Als Säurekomponenten kommen im wesentlichen Maleinsäure, Fumarsäure, Adipinsäure, Phthalsäure, Terephthalsäure, Isophthalsäure, Tetrahydrophthalsäure und Tetrachlor- sowie Tetrabromphthalsäure in Frage. Als Diole werden gewöhnlich 1,2-Propanol, 1,4-Butanol, Ethylenglycol, Neopentylglycol, Diethylenglycol, Bisphenol A und Tricyclodecandimethanol eingesetzt. In manchen Fällen können auch mono- und/oder tri- und höherfunktionelle Säure- oder Alkoholbausteine in den Polyestermolekülen enthalten sein. Bevorzugt sind ungesättigte Polyester auf Basis von Maleinsäure, Fumarsäure, Terephthalsäure und/oder Isophthalsäure als Säurekomponenten und 1,2-Propanol und/oder 1,4-Butanol als Diolkomponenten. Als Monomere enthalten die Polyesterharze z. B. Diallylphthalat, Divinylbenzol oder Styrol, das gegebenfalls im Gemisch mit Methacrylsäuremethylester verwendet wird. Feste ungesättigte Polyester sind kommerziell in vielfacher Form erhältlich.

Auch feste Melaminformaldehydharze, Kondensationsprodukte aus Melamin und Formaldehyd, sind allgemein bekannt und seit langem im Handel erhältlich, z. B. unter den Handelsnamen wie Kauromin® [BASF] oder Madurit® [HOECHST].

Das Mengenverhältnis von ungesättigtem Polyesterharz zu Melaminformaldehydharz in den erfindungsgemässen Formmassen kann in weiten Grenzen variieren. Im allgemeinen sollte es zwischen 1:1 und 9:1 liegen. Bevorzugt ist ein Verhältnis Polyesterharz zu Melaminformaldehydharz zwischen 2:1 und 4:1, besonders zwischen 2:1 und 3:1.

Chlorierte Polyethylene (auch mit CM bezeichnet) sind teilkristalline bis kautschukartige Produkte, die sich mit Peroxiden vernetzen lassen. Sie sind ebenfalls kommerziell erhältlich, z. B. unter Handelsnamen wie Bayer CM® [BAYER], Daisolac® [OSAKA SODA], DOW-CPE-CM® [DOW-CORNING] oder Hostapren® [HOECHST]. Ihr Chlorgehalt liegt im allgemeinen zwischen 25 und 45 Gewichtsprozent. Für die Erfindung wird ein relativ hoher Chlorgehalt, insbesondere zwischen 40 und 45 Gewichtsprozent bevorzugt.

Ausser den oben genannten Bestandteilen enthalten die erfindungsgemässen Formmassen in der Regel Härter und andere übliche Zusatzstoffe, wie man sie aus der Verarbeitungstechnik von MF- und UP-Formmassen kennt, sowie Füll- und/oder Verstärkungsstoffe.

Die Härter bzw. Initiatoren sind Verbindungen, die den Vernetzungsvorgang der Harz-bzw. Polymerkomponenten hervorrufen. Für die Vernetzung der ungesättigten Polyester-und der Chlorpolyethylenkomponenten sind übliche Peroxidinitiatoren geeignet, insbesondere Hydroperoxide, z. B. Cumolhydroperoxid, Alkyl-, Aryl-, Acetylbenzoyl-, Ketal- oder Ketonperoxide, z. B. Cyclohexanon- oder Methylethylketonperoxide, sowie Perester, z. B. Perbenzoate, denen gegebenenfalls Coaktivatoren zugesetzt werden können, z. B. Kobaltnaphthenat oder Vanadin- und Aminbeschleuniger. Den Peroxiden muss in der Regel ein Phlegmatisierungsmittel beigegeben werden, z. B. ein inerter mineralischer Füllstoff, Wasser oder ein Weichmacher auf Basis von Phthalaten. Handelsübliche Peroxidhärter enthalten solche Plegmatisierungsmittel bereits. Für die Melaminformaldehyharze können schwache Säuren, z. B. Carbon- oder Dicarbonsäuren, als Härter oder gegebenenfalls auch als latente Härter Stoffe, die erst bei erhöhter Temperatur Säure abspalten, zugesetzt sein.

Weitere übliche Zusatzstoffe sind z. B. Inhibitoren, wie Chinone, die die Verarbeitungszeit der Formmassen verlängern können, Farbstoffe, organische und anorganische Pigmente, z. B. Rutil, Anatas oder Kohlenstoff, Viskositätsregler, UV-Stabilisatoren, Antistatika, Flammschutzmittel, oder Gleitmittel, wie Paraffine, die die Verarbeitbarkeit der gehärteten Massen verbessern.

Eine andere wichtige Gruppe von Zusatzstoffen bilden verträgliche Füllstoffe. Als verträglich sind Füllstoffe im allgemeinen anzusehen, wenn sie einen pH-Wert von mindestens 7 aufweisen, wie Talkum, Schwerspat, Kaolin, Quarzmehl, Glaskugeln, Aluminiumtrihydrat, das gleichzeitig als Flammschutzmittel wirkt, Calciumcarbonat oder Dolomit, gegebenenfalls auch Metallpulver, und Verstärkungsfasern, nämlich organische, wie Holz-, Cellulose-, Sisal-, Polyacrylnitril-, Polyester-, Polyamid- (Kevlar®-) oder Polyvinylalkoholfasern, und anorganische Fasern, wie Glas-, Bor-, Metalloxid- oder auch Metallfasern. Manchmal kann es bei Verwendung solcher Zusätze auch zweckmässig sein, Haftvermittler, z. B. Silanverbindungen zuzusetzen, um den Verbund zwischen Füll- und Verstärkungsstoffen sowie den Kunststoffen zu verbessern.

Erfindungsgemässe Formmassen, die Füll- und/oder Verstärkungsstoffe und/oder übliche Zusatzstoffe enthalten, bilden eine bevorzugte Ausführungsform der Erfindung.

Bevorzugt sind hierbei Formmassen, die insgesamt 50 bis 80, bevorzugt 50 bis 65, Gewichtsprozent Füll-, Verstärkungs- und übliche Zusatzstoffe enthalten. Beispielsweise kann eine solche härtbare Formmasse be-

EP 0 549 523 A1

stehen aus etwa 13,5 bis 33,5 Gewichtsprozent ungesättigtem Polyesterharz, etwa 5,5 bis 13,5 Gewichtsprozent Melaminformaldehyharz, 1 bis 16 Gewichtsprozent chloriertem Polyethylen sowie insgesamt 80 bis 50 Gewichtsprozent Füll-, Verstärkungs- sowie üblichen Zusatzstoffen.

Die erfindungsgemässen Formmassen können beispielsweise dadurch hergestellt werden, dass man die Bestandteile zusammen aufschmilzt, und z. B. bei einer Temperatur von ca. 90 bis 110 °C vermischt und homogenisiert. Dabei kann gegebenenfalls auch von einer handelsüblichen MF-, UP-, oder UP/MF-Formmasse ausgegangen werden, der die noch fehlenden Bestandteile zugemischt werden. Vorzugsweise findet die Schmelzhomogenisierung der Formmasse in einer Extrusionsmaschine, wie einem Buss®-Kokneter, statt. Danach wird die Masse abgekühlt und zerkleinert. Die Teilchengrösse der fertigen Formmasse liegt im allgemeinen unter 4 Millimeter, insbesondere zwischen 0,125 und 3 Millimeter.

Aus den erfindungsgemässen härtbaren Formmassen können durch Anwendung von Hitze und Druck gehärtete Massen, insbesondere Formteile, erhalten werden. Die zur Härtung anzuwendenden Temperaturen liegen im allgemeinen zwischen 120 und 200 °C, insbesondere zwischen 150 und 180 °C. Der spezifische Druck kann z. B. zwischen 200 und 2000 bar liegen. Die Härtungszeit liegt im allgemeinen zwischen 10 Sekunden und einigen Minuten, bevorzugt zwischen 30 Sekunden und 5 Minuten. Selbstverständlich hängen die Verarbeitungsbedingungen auch von dem Formverfahren ab, das zur Anwendung kommt. Zur Herstellung von Formteilen aus den erfindungsgemässen Formmassen sind die üblichen aus der Technik von UP-, MF- und UP/MF-Formmassen bekannten Verfahren geeignet, z. B. Pressen, Spritzpressen und insbesondere Spritzgiessen. Die Herstellung neuer Formen ist bei Umstellung von den herkömmlichen Formmassen auf erfindungsgemässe im allgemeinen unnötig, was ein weiterer Vorteil der vorliegenden Erfindung ist.

Die aus den erfindungsgemässen Formmassen erhältlichen Formteile bilden ebenfalls einen Gegenstand der Erfindung. Sie können bevorzugt zur Herstellung von elektrischen Geräten Verwendung finden, beispielsweise als Schalter- oder Sicherungsgehäuse. Besonders geeignet sind die erfindungsgemässen Formmassen zur Herstellung von solchen Formteilen elektrischer Geräte, die bei üblicher Verwendung einer starken Abriebsbelastung ausgesetzt sind. Solche Teile, z. B. bewegliche und dabei mechanisch stark belastete Teile, wie Schaltbrücken, weisen, wenn sie aus erfindungsgemässen Formmassen hergestellt werden, aufgrund des verringerten Abriebs eine erheblich längere Lebensdauer auf als nach dem Stand der Technik.

Beispiele 1 bis 4:

Die in Tabelle 1 angegebenen Bestandteile werden mit einem Extruder (Kokneter PR 46 der Firma Buss, Pratteln, CH) bei einer Temperatur von ca. 100 °C homogenisiert und danach zu einem Granulat der Korngrösse zwischen 0,125 und 3 Millimetern vermahlen.

4

Tabelle 1:

| Bsp. Nr. | Zusammensetzung [Gewichtsprozent] | | | | | | | |
|---|---|---|---|---|---|---|---|---|
| | A | B | C | D | E | F | G | H |
| 1 | 27 | - | - | 25 | 40 | - | 5,5 | 2,5 |
| 2 | 24 | 8,5 | - | 25 | 35,5 | - | 4,5 | 2,5 |
| 3a | 23,5 | 8,5 | 1,0 | 25 | 35 | - | 4,5 | 2,5 |
| 3b | 23 | 8,5 | 2,0 | 25 | 34,5 | - | 4,5 | 2,5 |
| 3c | 22 | 8,5 | 4,0 | 25 | 33,5 | - | 4,5 | 2,5 |
| 3d | 20 | 8,5 | 8,0 | 25 | 31,5 | - | 4,5 | 2,5 |
| 4 | - | 50 | - | 25 | - | 20 | 2,5 | 2,5 |

A     Handelsübliches UP-Harz auf Basis von Fumar-, Phthal- und Terephthalsäure sowie alphatischen $C_2$-$C_4$-Glycolen,

B     Handelsübliches oligomeres MF-Harz (Molverhältnis Melamin zu Formaldehyd = 1/2; Kondensationsgrad ca. 10; Erweichungspunkt: ca. 105 °C),

C     CM (Chloriertes Polyethylen mit einem Chlorgehalt von 40 Gewichtsprozent; Aschegehalt: 6 Prozent; Flüchtige Anteile $\leq 0,3$ Prozent; Korngrösse: 95% < 500 μm),

D     Cellulose,

E     $Al(OH)_3$,

F     $CaCO_3$,

G     ZnS,

H     Härter (Peroxide, saure Salze), Pigmente, Gleitmittel (Metallstearate).

Aus den Granulaten werden Probeplatten (120 x 120 x 4 Millimeter) für die Abriebsprüfung sowie ISO-Schulterstäbe nach ISO 3167 im Spritzgiessverfahren hergestellt.

Die Verarbeitungsbedingungen hierbei sind:

a) Pressen
Presse:     BUCHER KHC 100
Werkzeugtemperatur:     170 °C
Härtezeit:     2 Minuten

b) Spritzgiessen
Spritzgiessmaschine:     BUCHER TS 120
Zylindertemperatur:     100°C/90°C
Werkzeugtemperatur:     175°C/175°C
Härtezeit:     50 Sekunden

Die Abriebsfestigkeit wird über das Reibradverfahren nach DIN 53 754 ermittelt. Dabei wird als Resultat der Abrieb in Kubikmillimeter [$mm^3$] oder in Milligramm [mg] angegeben. Geringe Messwerte bedeuten demnach hohe Abriebsfestigkeiten.

Die Schwindungsmesswerte werden nach ISO 3167 am ISO-Schulterstab bestimmt. Dabei ist die Verarbeitungsschwindung (VS) die Differenz zwischen dem Innenmass des kalten Werkzeugs (der kalten Form) und dem des erkalteten Probekörpers, bezogen auf das Innenmass des kalten Werkzeugs. Die Nachschwindung (NS) ergibt sich als Differenz zwischen dem Mass des erkalteten Probekörpers und dem Mass dieses Probekörpers nach einer Warmlagerung von 25 Stunden bei 120 °C, bezogen ebenfalls auf das Innenmass des kalten Werkzeugs. Die Gesamtschwindung (GS) schliesslich stellt die Summe der Werte von Verarbeitungs- und Nachschwindung dar.

Die Messwerte für Abrieb und Schwindung sind in Tabelle 2 zusammengestellt.

| Tabelle 2: | | | | | |
|---|---|---|---|---|---|
| Bsp. | Abrieb | | Schwindung [Prozent] | | |
| Nr. | [mg] | [mm$^3$] | VS | NS | GS |
| 1 | 1130 | 670 | 1,1 | 0,2 | 1,3 |
| 2 | 850 | 450 | 0,7 | 0,07 | 0,77 |
| 3a | 990 | 590 | 0,75 | 0,1 | 0,85 |
| 3b | 740 | 440 | 0,8 | 0,11 | 0,91 |
| 3c | 230 | 140 | 0,85 | 0,11 | 0,96 |
| 3d | 115 | 70 | 0,85 | 0,14 | 0,99 |
| 4 | 530 | 310 | 0,93 | 0,77 | 1,7 |

Man kann der Tabelle 2 entnehmen, dass der Probekörper 3a, der aus einer UP/MF-Formmasse mit einem Anteil etwas mehr als 3 Gewichtsprozent chloriertem Polyethylen, bezogen auf die Gesamtmenge von ungesättigtem Polyester- und Melaminformaldehydharz einen höheren Abrieb zeigt als ein Probekörper aus reiner UP/MF-Formmasse (Beispiel 2), die Werte für den Abrieb aber beim Probekörper 3b (ca. 6,4 Gewichtsprozent chloriertes Polyethylen) bereits geringer sind und bei weiterer Steigerung des Chlorpolyethylengehalts (Probekörper 3c, 3d) weiter stark absinken. Hierbei steigt die Nachschwindungt (NS) nur um 0,07 Prozent, die Gesamtschwindung (GS) um etwa 0,2 Prozent an, ein Anstieg, der technisch keine Probleme verursacht.

**Patentansprüche**

1. Härtbare Formmasse auf Basis ungesättigter Polyesterharze und Melaminformaldehyharze, die zusätzlich ein chloriertes Polyethylen in so grossem Anteil enthält, dass die Abriebsfestigkeit daraus hergestellter gehärteter Massen besser ist, als wenn die Formmasse das chlorierte Polyethylen nicht enthielte.

2. Formmasse nach Anspruch 1, die 6 bis 35 Gewichtsprozent chloriertes Polyethylen enthält, bezogen auf die Gesamtmenge von ungesättigtem Polyesterharz und Melaminformaldehydharz.

3. Formmasse nach Anspruch 2, die 10 bis 35, insbesondere 10 bis 20, Gewichtsprozent chloriertes Polyethylen enthält.

4. Formmasse nach einem der Ansprüche 1 bis 3, die ausserdem Füllstoffe und/oder Verstärkungsstoffe und/oder übliche Zusatzstoffe enthält.

5. Formmasse nach Anspruch 4, bestehend aus 13,5 bis 33,5 Gewichtsprozent ungesättigtem Polyesterharz, 5,5 bis 13,5 Gewichtsprozent Melaminformaldehyharz, 1 bis 16 Gewichtsprozent chloriertem Polyethylen sowie insgesamt 80 bis 50 Gewichtsprozent Füll-, Verstärkungs- sowie üblichen Zusatzstoffen.

6. Verwendung von chloriertem Polyethylen als Zusatz zu härtbaren Formmassen auf Basis ungesättigter Polyesterharze und Melaminformaldehyharze zur Verbesserung der Abriebsfestigkeit daraus hergestellter gehärteter Massen.

7. Verfahren zur Verbesserung der Abriebsfestigkeit gehärteter Massen auf Basis ungesättigter Polyesterharze und Melaminformaldehyharze, bei dem man Formmassen auf Basis beider genannter Harze vor der Härtung 6 bis 35 Gewichtsprozent, bezogen auf die Gesamtmenge von ungesättigtem Polyesterharz und Melaminformaldehydharz, eines chlorierten Polyethylens einverleibt.

8. Formteile erhältlich aus Formmassen nach einem der Ansprüche 1 bis 5.

9. Formteile nach Anspruch 8, die bei üblicher Verwendung einer starken Abriebsbelastung ausgesetzt sind.

**Europäisches Patentamt**

# EUROPÄISCHER RECHERCHENBERICHT

Nummer der Anmeldung

EP 92 81 0933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DATABASE WPI<br>Derwent Publications Ltd., London, GB;<br>AN 77-33603Y (19)<br>& JP-A-52 040 564 (MATSUSHITA ELEC WOR)<br>29. März 1977<br>* Zusammenfassung *<br>--- | 1-4,7-9 | C08L67/06<br>//<br>(C08L67/06,<br>61:20, 23:28) |
| Y | DATABASE WPI<br>Derwent Publications Ltd., London, GB;<br>AN 77-17204Y (10)<br>& JP-A-52 010 353 (OSAKA SODA KK) 26.<br>Januar 1977<br>* Zusammenfassung *<br>--- | 1-4,7-9 | |
| A | CHEMICAL ABSTRACTS, vol. 77, no. 6,<br>7. August 1972, Columbus, Ohio, US;<br>abstract no. 35520m,<br>Seite 42 ;Spalte 2 ;<br>& JP-B-71 027 572 (SHOWA DENKO K.K.)<br>10. August 1971<br>* Zusammenfassung *<br>--- | 1,4,8-9 | |
| A | CHEMICAL ABSTRACTS, vol. 98, no. 12,<br>21. März 1983, Columbus, Ohio, US;<br>abstract no. 90494q,<br>Seite 40 ;Spalte 1 ;<br>& JP-A-57 153 016 (MATSUSHITA ELECTRIC<br>WORKS, LTD.)<br>21. September 1982<br>* Zusammenfassung *<br>--- | 1,4,8-9 | RECHERCHIERTE SACHGEBIETE (Int. Cl.5)<br><br>C08L |
| A | DATABASE WPI<br>Derwent Publications Ltd., London, GB;<br>AN 79-17213B (09)<br>& JP-A-54 010 346 (OSAKA SODA KK) 25.<br>Januar 1979<br>* Zusammenfassung *<br><br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 28 APRIL 1993 | Kathryn Y.-P. Miao |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)